# EUROPEAN PATENT APPLICATION

(11) **EP 2 085 810 A1**
(43) Date of publication of application: **05.08.2009**
(21) Application number: 07829595.3
(22) Date of filing: 11.10.2007
(51) Int. Cl.: G02F 1/13, G02F 1/133, G02F 1/1368, G06F 3/041, G09F 9/00, G09G 3/20, G09G 3/36, H04N 1/028, H04N 5/335

(54) **DISPLAY APPARATUS**

(30) Priority: 19.10.2006 JP 2006285249
(71) Applicant: Sharp Kabushiki Kaisha, Osaka-shi, Osaka 545-8522 (JP)
(72) Inventor: KATOH, Hiromi, Osaka-shi, Osaka 545-8522 (JP); BROWN, Christopher, Osaka-shi, Osaka 545-8522 (JP)
(74) Representative: Müller - Hoffmann & Partner
(86) International application number: PCT/JP2007/069857
(87) International publication number: WO 2008/047677

(57) **Abstract**

The present invention provides a display apparatus with image capturing function including optical sensors in its pixels, particularly a display apparatus capable of capturing an image while suppressing the power consumption. The display apparatus includes: optical sensors and sensor wirings provided in a pixel region of an active matrix substrate; a sensor row driver for selecting the optical sensors row by row; a sensor pixel readout circuit for reading out signal charges from the optical sensors in the selected row; a sensor column amplifier including the number of amplifiers corresponding to the rows of the optical sensors for generating a sensor output voltage; a sensor column scanning circuit for selecting the signal charges readout by the sensor pixel readout circuit column by column so that the selected signal charges being outputted to the sensor column amplifier; and a buffer amplifier (6) provided subsequent to the sensor column amplifier (24). The sensor column amplifier (42) or the buffer amplifier (6) is provided with a standby switching circuit for suppressing an output to a subsequent stage of either of the amplifiers in accordance with a standby signal.

## Description

### Technical Field

The present invention relates to display apparatuses with image capturing function including optical sensors in their pixels, and particularly to display apparatuses capable of capturing an image while suppressing the power consumption.

### Background Art

Conventionally, there have been proposed display apparatuses with image capturing function capable of capturing an image of an object in the proximity of their displays by means of, for example, optical sensors, such as photodiodes, in the pixels. Such display apparatuses with image capturing function are intended to be used as display apparatuses for interactive communications and display apparatuses with touchscreen function.

In a conventional display apparatus with image capturing function, when well-known components such as signal lines, scan lines, thin film transistors (TFTs), and pixel electrodes are formed on an active matrix substrate using a semiconductor process, photodiodes are formed in the pixels at the same time (see JP 2006-3857 A and "A Touch Panel Function Integrated LCD Including LTPS A/D Converter", T. Nakamura et al., SID 05 DIGEST, pp.1054-1055, 2005, for example).

In order to readout signal charges from the optical sensors provided in the pixels, the conventional display apparatus with image capturing function includes, other than the signal lines and the scanning lines for driving the display pixels, wirings for the optical sensors formed in a matrix in accordance with the placement of the optical sensors; and a driving circuit for the optical sensors for supplying a driving signal to the wirings. Further, the conventional display apparatus requires a buffer circuit for outputting signals readout from the optical sensors to a signal processing circuit in sequence.

In the conventional display apparatus with image capturing function, since signal charges outputted from all of the optical sensors are processed by the driving circuit for the optical sensors and the buffer circuit, power consumption at the driving circuit for the optical sensors and at the buffer is huge.

### Disclosure of Invention

With the foregoing in mind, it is an object of the present invention to provide a display apparatus with image capturing function including optical sensors in its pixels, and particularly a display apparatus capable of capturing an image while suppressing the power consumption.

In order to solve the above problem, the display apparatus provided with an active matrix substrate of the present invention includes optical sensors provided in a pixel region of the active matrix substrate; sensor wirings arranged in a matrix in accordance with the placement of the optical sensors; a sensor row driver connected to the sensor wirings for selecting the optical sensors row by row; a sensor pixel readout circuit for reading out signal charges from the optical sensors in the row selected by the sensor row driver; a sensor column amplifier including the number of amplifiers corresponding to the rows of the optical sensors for generating a sensor output voltage in accordance with the signal charges; a sensor column scanning circuit for selecting the signal charges readout by the sensor pixel readout circuit column by column so that the selected signal charges being outputted to the sensor column amplifier; and a buffer amplifier provided subsequent to the sensor column amplifier. The sensor column amplifier or the buffer amplifier is provided with a standby switching circuit for suppressing an output to a subsequent stage of either of the amplifiers in accordance with a standby signal.

According to the above configuration, by suppressing an output to the subsequent stage of the sensor column amplifier or the buffer amplifier in accordance with a standby signal, the power consumption at these amplifiers can be suppressed.

The display apparatus of the present invention may have a configuration in which the sensor column amplifier includes a bias transistor, and the standby switching circuit switches supply voltages to a gate of the bias transistor, or a configuration in which the buffer amplifier includes a bias transistor, and the standby switching circuit switches supply voltages to a gate of the bias transistor.

The sensor column scanning circuit may interlace or drive the columns of the optical sensors by a multiphase driving.

The display apparatus of the present invention may include a counter substrate opposing the active matrix substrate, and liquid crystal interposed between the active matrix substrate and the counter substrate.

As described above, according to the present invention, it is possible to provided a display apparatus with image capturing function including optical sensors its pixels, particularly a display apparatus capable of capturing an image while suppressing the power consumption.

### Brief Description of Drawings

[FIG. 1] FIG. 1 is a block diagram showing a schematic configuration of a display apparatus according to one embodiment of the present invention.
[FIG. 2] FIG. 2 is an equivalent circuit diagram showing a configuration of one pixel in the display apparatus according to one embodiment of the present invention.
[FIG. 3] FIG. 3 is a circuit diagram showing an internal configuration of a sensor row driver provided in the display apparatus according to one embodiment of the present invention.
[FIG. 4] FIG. 4 is a circuit diagram showing a configuration of an optical sensor provided in the display apparatus according to one embodiment of the present invention.
[FIG. 5] FIG. 5 is a waveform diagram showing the relationship between a driving signal for the optical sensor provided in the display apparatus according to one embodiment of the present invention and an output from the optical sensor.
[FIG. 6] FIG. 6 is a circuit diagram showing a configuration of a sensor pixel readout circuit provided in the display apparatus according to one embodiment of the present invention.
[FIG. 7] FIG. 7 is a waveform diagram showing the relationship between the driving signal for the optical sensor provided in the display apparatus according to one embodiment of the present invention and an output from the sensor pixel readout circuit.
[FIG. 8] FIG. 8 is a circuit diagram showing a configuration example of a sensor column amplifier provided in the display apparatus according to one embodiment of the present invention.
[FIG. 9] FIG. 9 is a waveform diagram showing the relationship between the driving signal for the optical sensor provided in the display apparatus according to one embodiment of the present invention and an output from a sensor column scanning circuit.
[FIG. 10] FIG. 10 is a circuit diagram showing a buffer amplifier provided in a display apparatus according to one embodiment of the present invention.
[FIG. 11] FIG. 11 is a circuit diagram showing a configuration example of a sensor column amplifier when the buffer amplifier shown in FIG. 10 is used.

### Description of the Invention

Hereinafter, embodiments of the present invention will be described with reference to the drawings. It should be noted that the display apparatus of the present invention is employed as a liquid crystal apparatus in the embodiments. The display apparatus of the present invention, however, is not limited to a liquid crystal display apparatus and can be employed as any display apparatus using an active matrix substrate. The display apparatus of the present invention may be used as a display apparatus with touchscreen function in which input operation is performed by detecting an object in the proximity of the screen due to having image capturing function, a display apparatus for interactive communications with display and image capturing functions, or the like.

It should be noted, for each of the drawings, that only the main components among the components at every portion of the display apparatus in the embodiments of the present invention are shown in a simplified manner while the remaining components are not shown, for the purpose of convenience in explanation. Therefore, the display apparatus of the present invention may include arbitrary components not shown in each of the drawings for reference in the specification. It should be noted also that the dimensions of the components in each of the drawings do not necessarily indicate the actual dimensions of the components and dimensional ratios among the respective components and the like.

### Embodiment 1

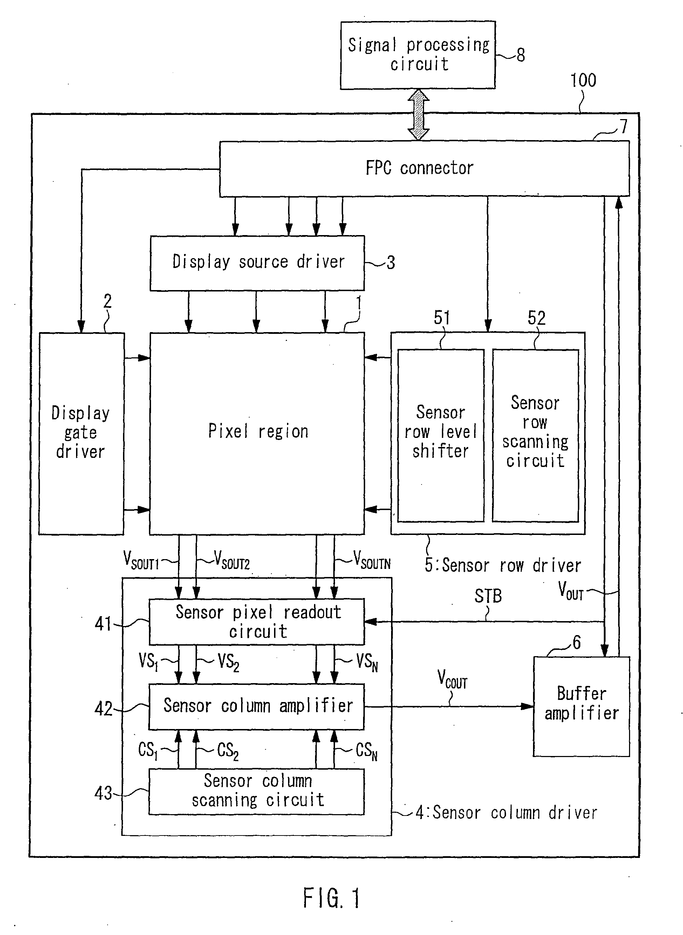

FIG. 1 is a block diagram showing a schematic configuration of an active matrix substrate 100 that a liquid crystal display apparatus according to one embodiment of the present invention includes. As shown in FIG. 1, the active matrix substrate 100 includes, on a glass substrate, at least a pixel region 1, a display gate driver 2, a display source driver 3, a sensor column driver 4, a sensor row driver 5, a buffer amplifier 6, and an FPC connector 7. Further, a signal processing circuit 8 for processing image signals captured by optical sensors (will be described below) in the pixel region 1 is connected to the active matrix substrate 100 via the FPC connector 7 and an FPC (not shown).

It should be noted that the components provided on the active matrix substrate 100 can be also formed monolithically on the glass substrate using a semiconductor process. Or, the drivers among the components may be mounted on the glass substrate using a chip on glass (COG) technique or the like. The active matrix substrate 100 is attached to a counter substrate (not shown) on which counter electrodes are formed entirely, and the space between the two substrates is filled with a liquid crystal material.

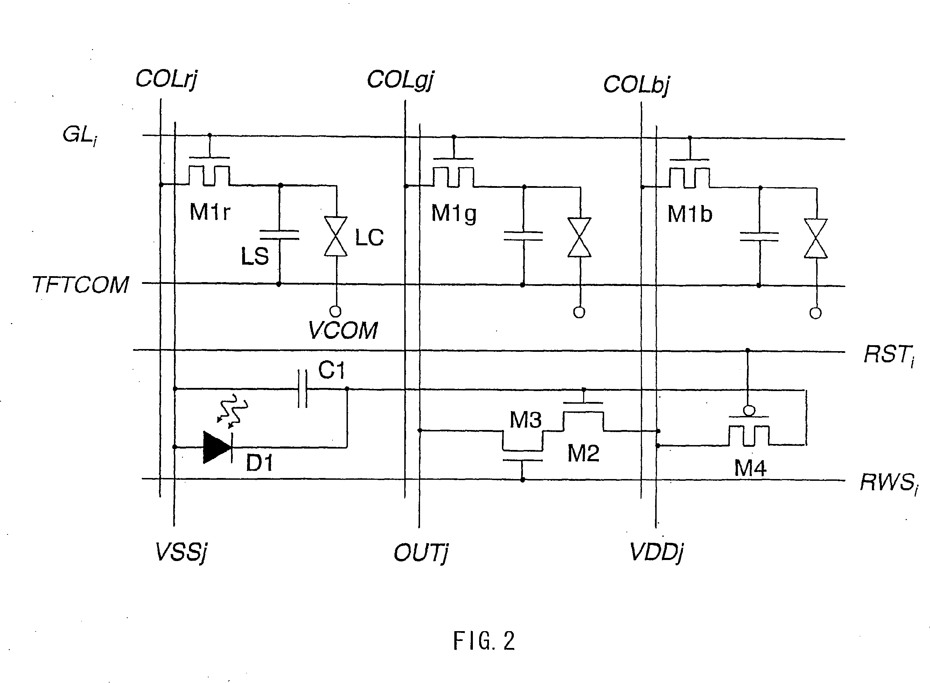

The pixel region 1 is a region where a plurality of pixels are formed to display an image. In the present embodiment, the optical sensor for capturing an image is provided in each of the pixels in the pixel region 1. FIG. 2 is an equivalent circuit diagram showing the placement of the pixels and the optical sensors in the pixel region 1 of the active matrix substrate 100. In the example shown in FIG. 2, one pixel is composed of picture elements of three colors; red (R), green (G), and blue (B), and one optical sensor is provided in one pixel formed of the three picture elements. The pixel region 1 includes pixels arranged in a matrix of M rows and N columns and optical sensors also arranged in a matrix of M rows and N columns. It should be noted that the number of picture elements is M × 3N, as described above.

Therefore, as shown in FIG. 2, the pixel region 1 includes, as wirings for the pixels, gate lines GL and source lines COL, both of which are arranged in a matrix. The gate lines GL are connected to the gate driver 2. The source lines COL are connected to the display source driver 3. The pixel region 1 includes M rows of the gate lines GL. Hereinafter, when it is necessary to describe the gate lines GL by distinguishing one another, they will be referred to as the gate lines GLi (i=1 to M). On the other hand, every pixel is provided with three source lines COL so that image data is supplied to the three respective picture elements in a single pixel, as described above. When it is necessary to describe the source lines COL by distinguishing one another, they will be referred to as the source lines COLrj, COLgj, and COLgj (j=1 to N).

Thin film transistors (TFT) M1 are provided at intersection points of the gate lines GL and the source lines COL as switching element for the pixels. In FIG. 2, the thin film transistors M1 provided in the respective picture elements of red, green, and blue are denoted by reference numerals M1r, M1g, and M1b, respectively. The gate electrodes, the source electrodes, and the drain electrodes of the thin film transistors M1 are connected to the gate lines GL, the source lines COL, and pixel electrodes (not shown), respectively. A liquid crystal capacitor LC is formed between each of the drain electrodes of the thin film transistors M1 and a counter electrode (VCOM). Further, an auxiliary capacitor LS is formed in parallel with the liquid crystal capacitor LC.

In FIG. 2, the picture element driven by the thin film transistor M1r connected to the intersection point of the gate line GLi and the source line COLrj is provided with a red color filter so that the color of the filter matches this picture element. This picture element functions as a red picture element by receiving red image data from the display source driver 3 via the source line COLrj. The picture element driven by the thin film transistor M1g connected to the intersection point of the gate line GLi and the source line COLgj is provided with a green color filter so that the color of the filter matches this picture element. This picture element functions as a green picture element by receiving green image data from the display source driver 3 via the source line COLgj. Furthermore, the picture element driven by the thin film transistor M1b connected to the intersection point of the gate line GLi and the source line COLbj is provided with a blue color filter so that the color of the filter matches this picture element. This picture element functions as a blue picture element by receiving blue image data from the display source driver 3 via the source line COLbj.

In the example shown in FIG. 2, one optical sensor is provided in every one pixel (three picture elements). The ratio between the number of the pixels and the number of the optical sensors, however, is not only limited to this example and can be changed arbitrarily. For example, one optical sensor may be disposed per one picture element or one optical sensor may be disposed per a plurality of picture elements.

As shown in FIG. 2, each of the optical sensors is formed of a photodiode D1, a capacitor C 1, and transistors M2 to M4. In the example shown in FIG. 2, Wirings VSS and VDD for respectively supplying constant voltages Vₛₛ and V_{DD} from the sensor column driver 4 to the optical sensor are formed in parallel with the source lines COL. Similarly, a wiring OUT for outputting an optical sensor output V_{SOUT} is formed in parallel with the source lines COL. The wiring OUT is connected to a sensor pixel readout circuit 41 of the sensor column driver 4. Since these wirings VSS, VSD, and OUT are formed in every one row, when it is necessary to describe them by distinguishing one another, they will be referred to as wirings VSSj, VSDj, and OUTj (j=1 to N), respectively.

Further, a wiring RST for supplying a rest signal is connected to the transistor M4 of the optical sensor. A wiring RWS for supplying a readout signal is connected to the transistor M3. The wirings RST and RWS are connected to the sensor row driver 5. Since these wirings RST and RWS are formed in every row, when it is necessary to describe them by distinguishing one another, they will be referred to as wirings RSTi and RWSi (i = 1 to M), respectively.

As shown in FIG. 1, the sensor column driver 4 includes the sensor pixel readout circuit 41, a sensor column amplifier 42, and a sensor column scanning circuit 43. A wiring SOUT for outputting an optical sensor output V_{SOUT} from the pixel region 1 is connected to the sensor pixel readout circuit 41. In FIG. 1, reference numeral V_{SOUTj} denotes an optical sensor output from a wiring SOUTj (j = 1 to N). The sensor pixel readout circuit 41 outputs a peak hold voltage V_{Sj} of the optical sensor output V_{SOUTj} to the sensor column amplifier 42. The sensor column amplifier 42 includes N column amplifiers corresponding respectively to the N rows of optical sensors in the pixel region 1. The sensor column amplifier 42 amplifies the peak hold voltage V_{Sj} (j = 1 to N) at each of its column amplifiers, and outputs the amplified peak hold voltage to the buffer amplifier 6 as V_{COUT}. The sensor column scanning circuit 43 outputs a column select signal CSj (j = 1 to N) to the sensor column amplifiers 42 so as to connect the column amplifiers of the sensor column amplifiers 42 to outputs to the buffer amplifier 6 in sequence.

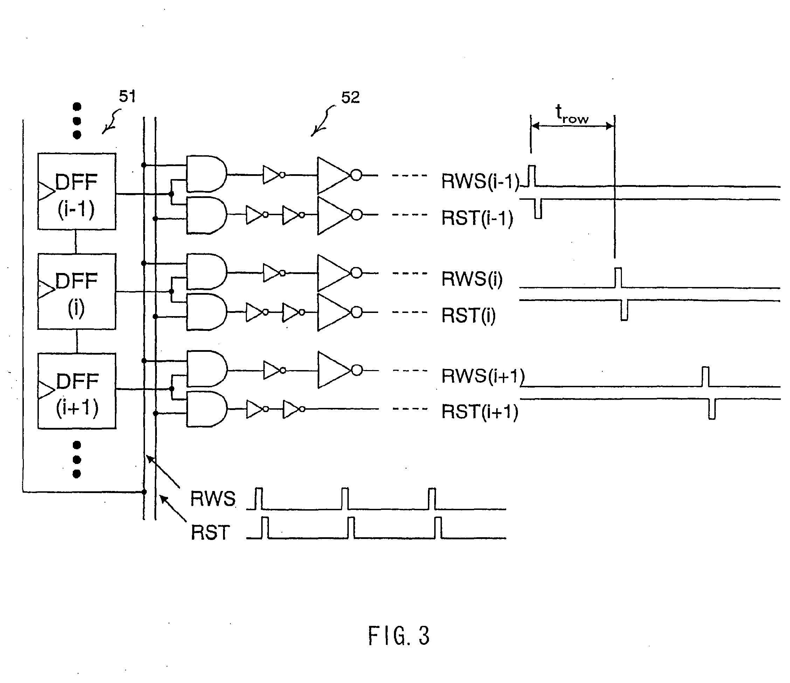

One example of the internal configuration of the sensor row driver 5 will be described with reference to FIG. 3. The sensor row driver 5 having the configuration shown in FIG. 3 includes a sensor row scanning circuit 52 formed of shift resistors and a sensor row level shifter 51. The sensor row scanning circuit 52 selects the wirings RSTi and RWSi shown in FIG. 2 in sequence at a predetermined time interval t_{row}. Thereby, among the rows of optical sensors in the pixel region 1, the row from which signal charges are to be readout is selected in sequence.

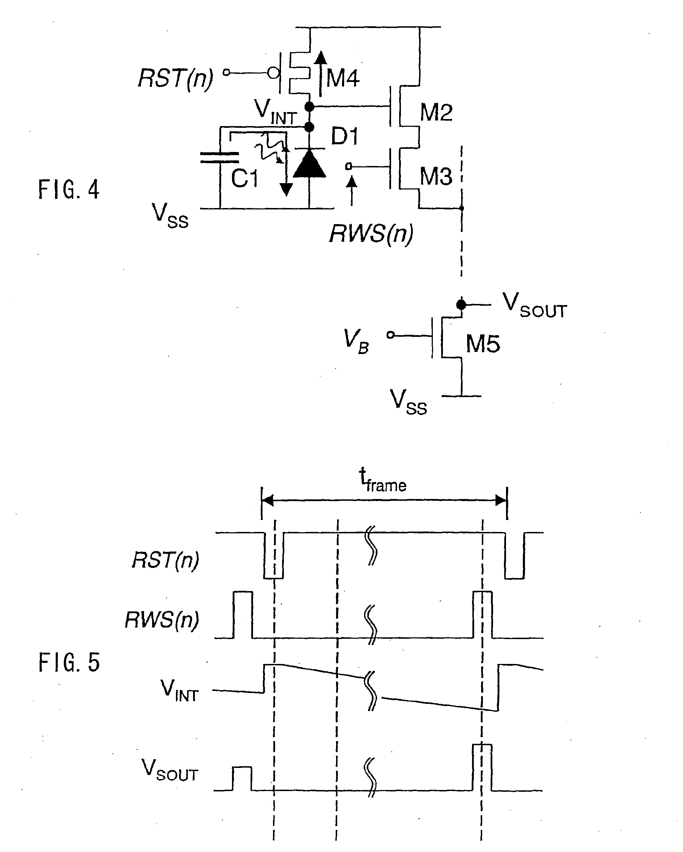

A readout of an optical sensor output from the pixel region 1 will be described with reference to FIGS. 4 to 7. As shown in FIGS. 4 and 5, the voltage of the optical sensor decreases gradually from an initial voltage V_{INT} at the time when a reset signal RST is applied to the transistor M4, in accordance with an amount of light received by the photodiode D1. When a readout signal RWS is turned ON, the optical sensor output V_{SOUT} is readout from the optical sensor. The transistor M5 shown in FIG. 4 is provided at the end of each row.

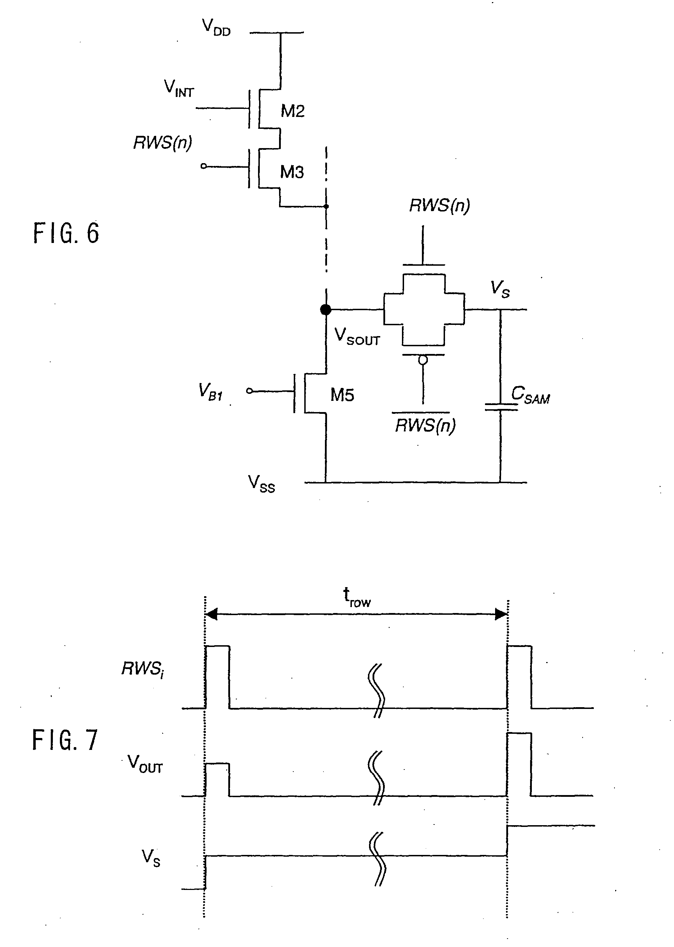

As shown in FIG. 6, when the readout signal RWS is turned ON (high level), the transistor M3 is conducted, thereby a source follower amplifier is formed by the transistors M2 and M5 and the optical sensor output V_{SOUT} is charged in a sample capacitor C_{SAM}. Even after the readout signal RWS is turned OFF (low level), as shown in FIG. 7, an output voltage Vs from the sensor pixel readout circuit 41 is maintained at a level equal to the peak value of the optical sensor output V_{SOUT} in the period (t_{row}) during which the row is selected.

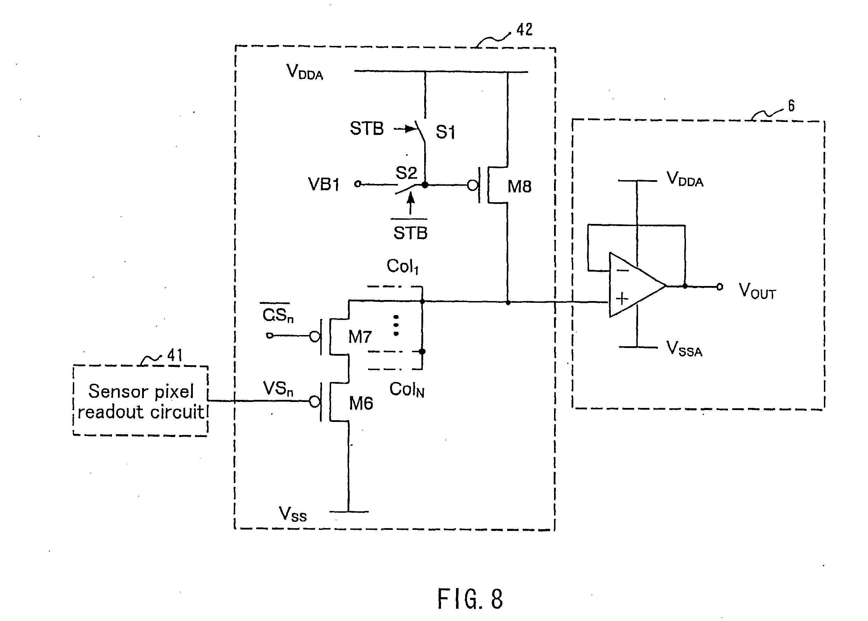

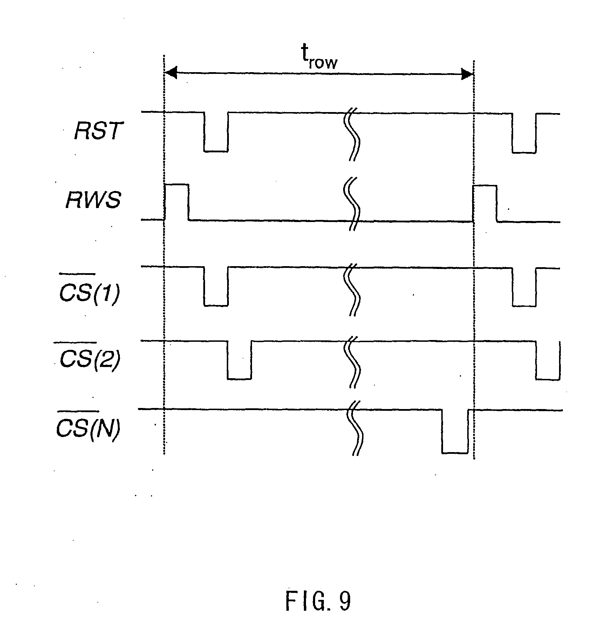

Next, an operation of the sensor column amplifier 42 will be described with reference to FIGS. 8 and 9. As shown in FIG. 8, in the sensor column amplifier 42, the output voltages V_{Sj} (1 = 1 to N) of respective rows are inputted to the N column amplifiers from the sensor pixel readout circuit 41. As shown in FIG. 8, one column amplifier to which the output voltage V_{Sj} is inputted is formed of the transistors M6 and M7. As shown in FIG. 9, due to column select signals CSj generated by the sensor column scanning circuit 43 being turned ON in sequence with respect to the N respective columns in the period (t_{row}) during which one row is selected, the transistor M6 of only one column amplifier among the N column amplifiers in the sensor column amplifier 42 is turned ON, and through that transistor M6, only one of the output voltages V_{Sj} (j = 1 to N) of respective rows is outputted to the buffer amplifier 6 as an output V_{COUT} from the sensor column amplifier 42.

It should be noted that, in the sensor column amplifier 42, a column source follower bias transistor M8 is connected between the transistor M6 and an output end to the buffer amplifier, as shown in FIG. 8. The column source follower bias transistor M8 is provided in the vicinity of the buffer amplifier 6 in every column. The transistors M6, M7, and M8 form a source follower amplifier. Further, a standby switching circuit for switching supply voltages to the column source follower bias transistor M8 in accordance with the standby signal STB is provided in the sensor column amplifier 42. Due to the switching of switches in accordance with the standby signal STB, the standby switching circuit applies a constant voltage V_{DDA} to the gate of the column source follower bias transistor M8 when the level of the standby signal STB is high (standby ON) and applies a bias voltage V_{B1} to the gate of the column source follower bias transistor M8 when the level of the standby signal STB is low (standby OFF).

In the standby mode, a switch S1 closes and a switch S2 opens as a result of the level of the standby signal STB being set at high. At this time, since the constant voltage V_{DDA} is applied to the gate of the column source follower bias transistor M8, the column source follower bias transistor M8 is turned off. Since a current does not run through the sensor column amplifier 42 when the column source follower bias transistor M8 is turned off, consumption of power does not occur. In contrast, in the non-standby mode, the switch S1 opens and the switch S2 closes as a result of the level of the standby signal STB being set to low. At this time, the reference bias voltage V_{B1} is applied to the gate of the column source follower bias transistor M8, thereby the sensor column amplifier 42 operates in the non-standby mode and outputs the V_{COUT} to the buffer amplifier 6. The buffer amplifier 6 further amplifies the V_{COUT} outputted from the sensor column amplifier 42, and outputs it to the signal processing circuit 8 as V_{OUT}. As described above, by setting the level of the standby signal STB to high, the power consumption at the sensor column amplifier 42 can be reduced.

The signal processing circuit 8 receives optical sensor images outputted as V_{OUT} and controls the switching of the standby signal STB. That is, since there are M × N optical sensors in the pixel region 1, M × N sensor pixel values from these optical sensors are obtained from the outputs V_{OUT}. The signal processing circuit 8 converts each of M × N outputs V_{OUT} from analog to digital, and compares the obtained sensor pixel values with a predetermined threshold. When the number of the sensor pixel values that exceed the threshold does not exceed a predetermined number, the signal processing circuit 8 determines that an object is not in the proximity of the screen of the display apparatus, and maintains the level of the standby signal STB at high (standby ON) so as to reduce the power consumption. In contrast, when the number of the sensor pixel values that exceed the threshold exceeds the predetermined number, the signal processing circuit 8 determines that some object is in the proximity of the screen of the display apparatus, and switches the level of the standby signal STB from high to low (standby OFF) so as to obtain an object image at a higher resolution. It should be noted that the switching of the level of the standby signal STB is not limited to this example, and it is possible to switch the level of the standby signal STB in accordance with other various criteria.

### Embodiment 2

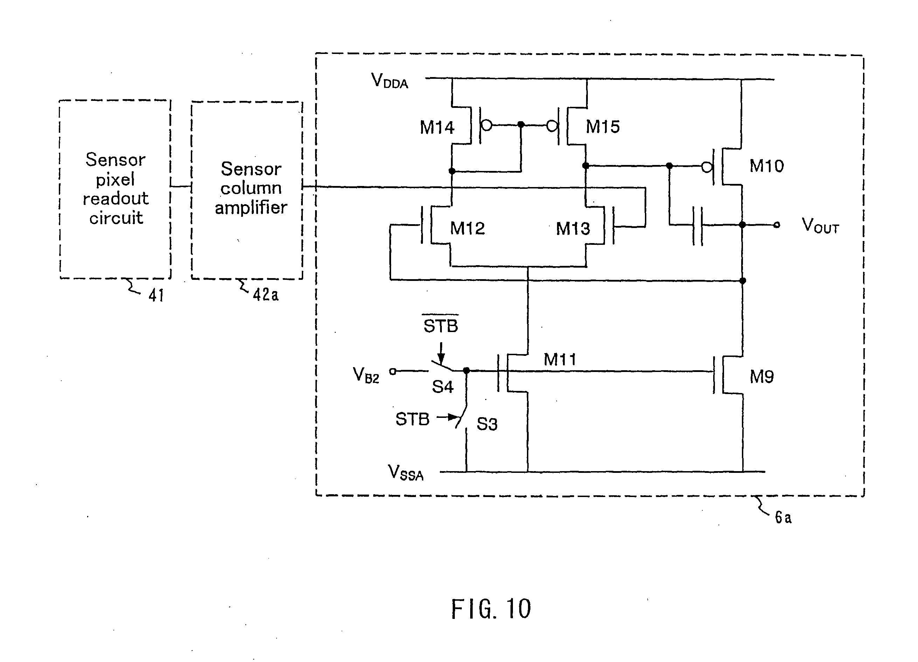

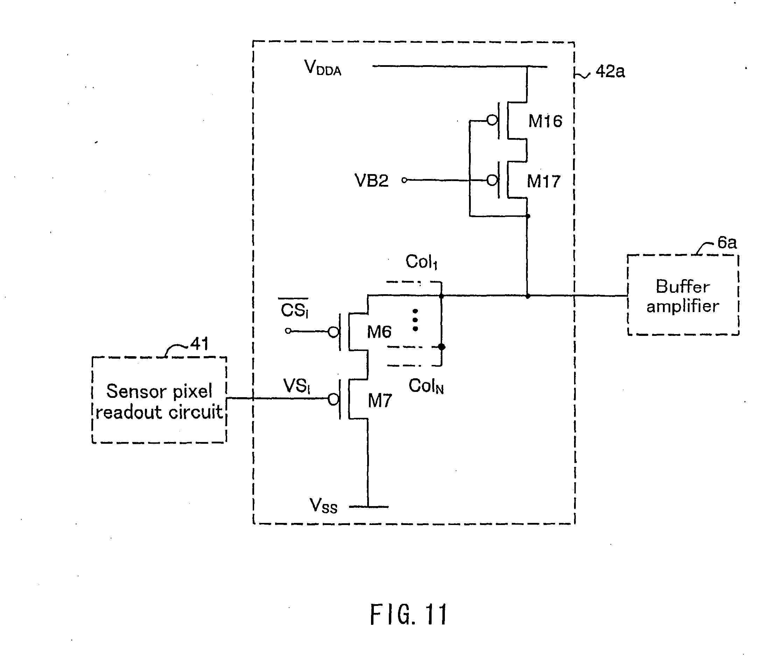

Embodiment 1 referred to the configuration in which the standby switching circuit is provided in the sensor column amplifier 42. In contrast, a display apparatus according to Embodiment 2 includes a sensor column amplifier 42a instead of the sensor column amplifier 42, and a buffer amplifier 6a including a standby switching circuit instead of the buffer amplifier 6 as shown in FIG. 10. It should be noted that, as shown in FIG. 11, the sensor column amplifier 42a is different from the sensor column amplifier 42 in Embodiment 1 in that it does not include a standby switching circuit.

As shown in FIG. 10, the buffer amplifier 6 is provided with a standby switching circuit for performing switching so that a constant voltage V_{SSA} is supplied to bias transistors M11 and M9 when the level of the standby signal STB is high (standby ON) and a reference bias voltage V_{B2} is supplied to the bias transistors M11 and M9 when the level of the standby signal STB is low (standby OFF).

In the standby mode, a switch S3 closes and a switch S4 opens as a result of the level of the standby signal STB being set to high. At this time, the constant voltage V_{SSA} is applied to the bias transistors M11 and M9, thereby the bias transistors M11 and M9 are turned off. Since a current does not run through the buffer amplifier 6a when the bias transistors M11 and M9 are turned off, consumption of power does not occur. In contrast, in the non-standby mode, the switch S3 opens and the switch S4 closes as a result of the level of the standby signal STB being to low. At this time, the reference bias voltage V_{B2} is applied to the bias transistors M11 and M9, thereby the buffer amplifier 6a operates in the non-standby mode and outputs V_{OUT} to the signal processing circuit 8. As described above, by setting the level of the standby signal STB to high, the power consumption at the buffer amplifier 6a can be reduced.

It should be noted that, in Embodiment 1 or 2, the sensor column scanning circuit 43 may scan the rows of optical sensors row by row or may interlace the rows of optical sensors. Further, the sensor column scanning circuit 43 may be formed as a multiphase, e.g., four phases, driving scanning circuit.

### Industrial Applicability

The present invention is industrially applicable as a display apparatus with image capturing function including optical sensors its pixels, particularly as a display apparatus capable of capturing an image while suppressing the power consumption.

## Claims

1. A display apparatus provided with an active matrix substrate, comprising:
optical sensors provided in a pixel region of the active matrix substrate;
sensor wirings arranged in a matrix in accordance with the placement of the optical sensors;
a sensor row driver connected to the sensor wirings for selecting the optical sensors row by row;
a sensor pixel readout circuit for reading out signal charges from the optical sensors in the row selected by the sensor row driver;
a sensor column amplifier including the number of amplifiers corresponding to the rows of the optical sensors for generating a sensor output voltage in accordance with the signal charges;
a sensor column scanning circuit for selecting the signal charges readout by the sensor pixel readout circuit column by column so that the selected signal charges being outputted to the sensor column amplifier; and
a buffer amplifier provided subsequent to the sensor column amplifier,
wherein the sensor column amplifier or the buffer amplifier is provided with a standby switching circuit for suppressing an output to a subsequent stage of either of the amplifiers in accordance with a standby signal.

2. The display apparatus according to claim 1,
wherein the sensor column amplifier includes a bias transistor, and
the standby switching circuit switches supply voltages to a gate of the bias transistor.

3. The display apparatus according to claim 1,
wherein the buffer amplifier includes a bias transistor, and
the standby switching circuit switches supply voltages to a gate of the bias transistor.

4. The display apparatus according to any one of claims 1 to 3,
wherein the sensor column scanning circuit interlaces columns of the optical sensors.

5. The display apparatus according to any one of claims 1 to 4,
wherein the sensor column scanning circuit drives the columns of the optical sensors by a multiphase driving.

6. The display apparatus according to any one of claims 1 to 5,
wherein the display apparatus further includes a counter substrate opposing the active matrix substrate, and liquid crystal interposed between the active matrix substrate and the counter substrate.
